# EUROPEAN PATENT APPLICATION

(11) **EP 3 421 673 A1**
(43) Date of publication of application: **02.01.2019**
(21) Application number: 17178034.9
(22) Date of filing: 27.06.2017
(51) Int. Cl.: E02F 9/00, E02F 9/26, G01L 5/00, F16C 19/52

(54) **A METHOD AND A SYSTEM FOR DETERMINING A LOAD IN A LINKAGE OF A WORKING MACHINE**

(71) Applicant: Volvo Construction Equipment AB, 631 85 Eskilstuna (SE)
(72) Inventor: KUMAR, Manoranjan, 352 40 Växjö (SE); SKOGH, Lennart, 632 33 Eskilstuna (SE); EKEVID, Torbjörn, 540 12 Landsbro (SE)
(74) Representative: Volvo Technology Corporation

(57) **Abstract**

The invention relates to a method for determining a load in a working machine (101) comprising a linkage (106) configured to be connected to an implement (107). The method comprises: determining (S1) at least one pressure in a first hydraulic cylinder (108) and at least one pressure in a second hydraulic cylinder (110) arranged to control the linkage and determining (S2) at least one link angle between at least two links in the linkage. The method further comprises, for a known linkage configuration and for a selected linkage bearing, determining (S3), for each of the first and second hydraulic cylinder, at least two perpendicular force components acting on the bearing, based on the determined at least one pressure in each of the first and second cylinders and the at least one link angle, determining (S4) a load on the bearing as a linear combination of the determined at least two perpendicular force components using predetermined constants for the linear combination, and providing (S5) information indicative of the load to an operator of the vehicle. The invention also relates to a system for performing the above method.

## Description

### TECHNICAL FIELD

The invention relates to a method and a system for determining a load in a linkage bearing of a working machine.

The invention is applicable on working machines within the fields of industrial construction machines or construction equipment, in particular wheel loaders and other types of working machines comprising a linkage powered by hydraulic cylinders. Although the invention will mainly be described with respect to a wheel loader, the invention is not restricted to this particular vehicle, but may also be used in other vehicles such as excavators, backhoe loaders and the like.

### BACKGROUND

Working machines such as wheel loaders and excavators are often used in a repetitive manner where the same work cycle is performed repeatedly for long periods of time. In order to optimize the overall efficiency of the working machine and the life length of components in the working machine it is often desirable to find the most efficient manner of performing a specific work cycle. The efficiency of operating the working machines can for example be defined in terms of fuel or component life time decrease per amount of material moved in each work cycle.

In a working machine comprising a linkage and an implement connected to the linkage, components of the linkage are many times exposed to high loads leading to wear and tear. If the working machine is operated in a non-optimal fashion, excessive wear and tear of the linkage which may lead to a reduced life length of components in the linkage, thereby requiring more frequent servicing or reducing the overall life length of the linkage and other parts of the working machine. Accordingly, it is desirable to optimize operation of the working machine with respect to fuel consumption of the machine and wear and tear of the linkage and of other components in the working machine. This can in part be achieved by providing operating instructions to the operator of the vehicle describing an optimized manner of operating a working machine.

It is known to equip working machines with a plurality of sensors and to provide such sensor equipped working machines to customer sites for training purposes, where the wear and tear and fuel consumption can be determined and reported to the operator. Thereby, operators can try the working machines at a test facility to learn how to operate the working machine and how to perform a specific work cycle in an optimized manner.

However, equipping each working machine with the required range of sensors is a very expensive process and there is also a risk that an operator does not operate the machine at the test facility in the same manner that the machine is usually operated in normal circumstances. Moreover, the training is also limited to the particular working machine, linkage and implement combination used, meaning that an operator potentially would need to train with several different working machines in order to learn how to efficiently operate different combinations of working machines, linkages and implements.

US2006/0243056 describes a working machine comprising a plurality of sensors to measure and estimate loads of the working machine during operation in order to construct a load history database for loads of the linkage used. The sensor network for determining loads described by US2006/0243056 comprises a plurality of different sensors such as hydraulic pressure sensors, cylinder position sensors, work implement position sensors, load pins and bending bridges for obtaining the required data for constructing the load history database.

Accordingly, it is desirable to provide a simplified system and method for determining loads in a working machine.

### SUMMARY

An object of the invention is to provide a method and a system for determining a load in a linkage of a working machine using a reduced number of sensors compared to what is used in known methods and systems, and to use the determined load information to instruct an operator how to operate the working machine in an efficient manner.

According to a first aspect of the invention, the object is achieved by a method according to claim 1.

Accordingly, there is provided a method for determining a load in a working machine comprising a linkage configured to be connected to an implement. The method comprises: determining at least one pressure in a first hydraulic cylinder and at least one pressure in a second hydraulic cylinder arranged to control the linkage and determining at least one link angle between at least two links in the linkage. The method further comprises, for a known linkage configuration and for a selected linkage bearing, determining, for each of the first and second hydraulic cylinder, at least two perpendicular force components acting on the bearing, based on the determined at least one pressure in each of the first and second cylinders and the at least one link angle, determining a load on the bearing as a linear combination of the determined at least two perpendicular force components using predetermined constants for the linear combination, and providing information indicative of the load to an operator of the vehicle.

Thereby, by measuring the pressure in the cylinders and by knowing a linkage position based on the determined angle, the force contribution from each of the two cylinders is taken into account to determine a bearing load. Since the linkage configuration can be assumed to be known, the determined angle is sufficient to determine the respective force components acting on the bearing, resulting from the pressures of the two cylinders. The determined angle may for example be an angle between two links of the linkage or a lifting angle of the linkage. Moreover, determining loads of different bearings may require knowledge of different angles. It is also possible to determine the required number of angles of the linkage such that force component for all bearings of the linkage can be determined based on the measured angles, i.e. such that the position of all parts of the linkage is known based on the determined angles. The positions, i.e. the extension, of the hydraulic cylinders can also be estimated based on the determined angles. It is also possible to use position sensors or displacement sensors in the lift and tilt cylinders of the linkage. It should be understood that the number of angles which must be determined is based on the specific linkage configuration for which the method is to be applied.

For hydraulic cylinders comprising two chambers, two pressures are determined in the respective first and second hydraulic cylinders. Such cylinders are referred to as double acting hydraulic cylinders, thereby requiring two pressure sensors. However, there are also types of hydraulic cylinders comprising only one chamber where it is sufficient to only determine one pressure.

The predetermined constants for the linear combination are predetermined for the specific known linkage. Accordingly, the angle is used to transform the determined pressures into force components acting on the bearing described in a common coordinate system.

Hereby, a method is provided by which a bearing load can be determined based only on a determined linkage angle and determined pressures in hydraulic cylinders of the linkage, thereby reducing the number of sensors required for determining a bearing load. The load is determined as a linear combination of the force contributions from the hydraulic cylinders, and more specifically from determined perpendicular force components in a common coordinate system. By means of the described method it is possible to determine a bearing load using a minimum number of sensors, meaning that the described method can be implemented in all produced working machines at a low cost, and not only in specific training machines. Thereby, it is possible to determine and monitor bearing loads under actual working conditions without using sensors such as calibrated strain gauges, load pins, half bridges or bending bridges. Moreover, nonlinearities in the structure due to e.g. nonlinear bushings, flexible elements and the like are taken into account by the described method.

By means of the above described method for determining a load of the linkage of the working machine, relevant information indicative of the load can be provided to an operator of the vehicle which in turn enables the operator to operate the working machine efficiently. In particular, the operator can immediately identify actions which result in excessive loads on parts of the linkage, and adjust the operation of the working machine accordingly from the beginning of the work cycle. This in turn leads to an increased life length of the linkage, increased service intervals and possibly also a reduction of fuel consumption since the working machine can be operated more efficiently. Moreover, the information provided to the operator may not only be used to warn the operator, but also to inform the operator of when the working machine is operated at or near optimal conditions, thereby providing positive feedback when the operator performs an action in a preferred manner. The information may be provided to the operator automatically or in a semi-automatic mode which may need to be activated by the operator. The operator may for example request information during certain actions of a work cycle. The information provided to the operator may for example include a preferred speed of the working machine, an angle of the linkage or information on how to move the bucket in an optimized manner during the work cycle.

The information may be provided to the operator in the form of visual, audio or tactile information, or as a combination of two or more of the aforementioned. Moreover, the mode of information may be different for different circumstances. Visual information may for example comprise graphs, numbers, figures, text or warning lamps. A display system may also be provided for encouraging the user to operate the working machine with respect to parameters such as a required angle when filling the bucket using different levers, braking, acceleration and torque from rim pull etc. An optimization of the described parameters will interact in a way to increase life length of the linkage and different components of working machines.

According to one embodiment of the invention, the method may further comprise determining a load of a plurality of bearings of said linkage. Based on the determined load of the plurality of bearings, a combined load value for the linkage can be determined. The combined load value is then comparing with a predetermined reference load value for the linkage and information indicative of a correspondence of the combined load value to the reference load value is provided to the operator. Hereby, the operator can immediately recognize if an action is performed where determined bearing loads exceed predetermined threshold values. Thereby, the operator can modify the vehicle operation to avoid such excessive loads. Moreover, by combining the loads for a plurality of bearings, a combined load value is provided which can be easily understood by the operator.

The reference load value may for example be set based on specific knowledge of the bearings or of components connected to the bearings. Moreover, the reference load value may also be set to encourage energy optimized operation of the working machine, for example with respect to the weight of the load carried by the working machine, thereby reducing the overall fuel consumption.

According to one embodiment of the invention, the method may further comprise providing a warning to the operator if the combined load value exceeds the reference load value. Thereby, situation which may damage the working machine can be avoided. The warning to the driver may comprise one or more visual, audio or tactile signals. There may also be a staggered response with increasingly noticeable information to the operator depending on the severity of the situation and based on by how much the reference load value is exceeded.

According to one embodiment of the invention the method may further comprise transforming at least one determined load for a predetermined time period into a predicted life consumption of at least one element of the linkage. Thereby, the operator can immediately receive information related to the life length, fatigue life, and or life consumption for an element of the linkage and other components of the working machine. The element may be a link, a bearing, an implement or any other part of the linkage which is exposed to a load during operation of the working machine.

According to one embodiment of the invention, transforming at least one determined load for a predetermined time period into a predicted life consumption may comprise determining a stress in the element based on the determined load using finite element (FEM) calculations. The component in which the stress is determined may for example be a part of the bearing or a link connected to a bearing. The FEM analysis result may be used in the vehicle for selected components or locations of a component. Moreover, stress tensors for the respective loads can be cumulatively multiplied with the loads to provide an accumulated measure of the stress in the component, thereby making it possible to predict a life consumption and remaining life of the component.

According to one embodiment of the invention, the method may further comprise: performing a predetermined work cycle; determining a load of at least one bearing during the work cycle; estimating a life consumption of at least one element of the linkage for the work cycle; comparing the estimated life consumption of the element for the performed work cycle with an reference life consumption of the element for a corresponding reference work cycle; and providing information to the operator indicative of the correspondence between the estimated life consumption and the reference life consumption. Hereby, the operator can be informed of how efficiently a particular work cycle is performed in terms of predicted life consumption when compared to a reference work cycle. The reference life consumption may for example be based on an optimal work cycle or on a typical or average work cycle.

According to one embodiment of the invention, the method may further comprise, for a predetermined work cycle, identifying a work state within said work cycle where a load exceeds a reference load for a corresponding reference work state. Hereby, specific states of a work cycle with high loads can be identified and the operator can be informed. A state may for example be a specific linkage position

According to one embodiment of the invention, the method may further comprise, for a predetermined work cycle, identifying an operation within said work cycle where a load exceeds a reference load for a corresponding reference operation. An operation of a work cycle for a wheel loader may for example be a bucket fill operation or a bucket empty operation.

According to one embodiment of the invention, the method may further comprise providing information to the operator based on the load in the form of a percentage of a reference value. Thereby, an easily understandable measure of the load can be presented to the operator of the vehicle. The reference value may for example represent a maximum allowable load, an optimal load or an average historical load.

According to one embodiment of the invention, the method may further comprise providing information describing life consumption to a remote server. Hereby, information can be gathered centrally to i.e. determine maintenance and repair needs for a specific working machine.

Moreover, there is provided a computer readable medium carrying a computer program product comprising program code means for performing above described method when the program product is run on a computer.

According to a second aspect of the invention, the object is achieved by a system according to claim 13.

Accordingly, there is provided a system for determining a load in a working machine. The system comprises a linkage of a working machine, the linkage being configured to be connected to an implement; a first hydraulic cylinder and a second hydraulic cylinder arranged to control the linkage; at least one pressure sensor arranged in each first and second hydraulic cylinder to determine a pressure in the respective cylinder; and at least one angle sensor arranged to determine a link angle between at least two links of the linkage. The system further comprises a control unit configured to, for a known linkage configuration and for a selected linkage bearing, determine at least two perpendicular force components acting on the bearing, based on the first and second pressure and the link angle; and determine a load on the bearing as a linear combination of the determined force components using predetermined constants for the linear combination, the system further comprising means for providing information indicative of the load to an operator of the vehicle.

According to one embodiment of the invention, the means for providing information may comprise a display, a speaker and/or a haptic device. The various means for providing information may be used alone or in combination in order to provide information to the operator of the vehicle in a desirable manner.

Effects and features of this second aspect of the present invention are largely analogous to those described above in connection with the first aspect of the invention.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a wheel loader comprising a system according to an embodiment of the invention,
Fig. 2 is a flow chart outlining a method according to an embodiment of the invention,
Fig. 3 is a linkage of a wheel loader comprising a system according to an embodiment of the invention,
Fig. 4 is a linkage of a wheel loader comprising a system according to an embodiment of the invention,
Fig. 5 is an excavator comprising a system according to an embodiment of the invention, and
Fig. 6 schematically illustrates an interior of a working machine comprising a system according to an embodiment of the invention.

### DETAILED DESCRIPTION OF EXAMPLE EMBODIMENTS OF THE INVENTION

In the present detailed description, various embodiments of a method and system according to the present invention are mainly discussed with reference to a wheel loader comprising a linkage and a bucket. It should be noted that this by no means limits the scope of the present invention which is equally applicable to other types of linkages and implements as well as to other types of working machines such as excavators, backhoe loaders and similar types of working machines comprising hydraulic cylinders for operating part of the working machine.

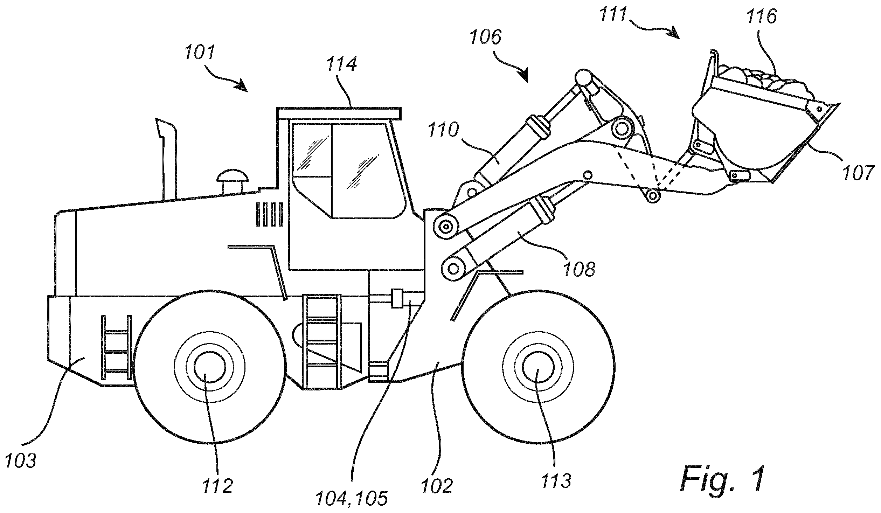

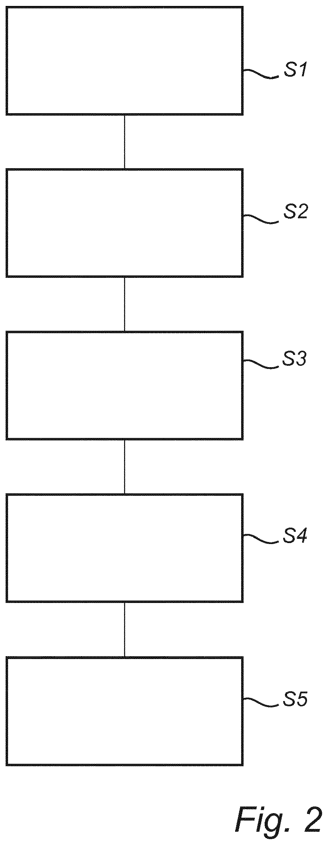

Fig. 1 schematically illustrates a working machine 101 comprising a system for determining a load according to an embodiment of the invention. The working machine of Fig. 1 will be discussed with reference to Fig. 2 comprising a flow chart outlining the general steps of a method for determining a load in a working machine 101 according to an embodiment of the invention.

FIG. 1 shows a side view of a working machine in the form of a wheel loader 101. The wheel loader 101 comprises a front vehicle part 102 and a rear vehicle part 103, which parts each comprise a frame and a pair of drive axles 112, 113. The rear vehicle part 103 comprises a cab 114. The vehicle parts 102, 103 are coupled together with one another in such a way that they can be pivoted in relation to one another about a vertical axis by means of two hydraulic steering cylinders 104, 105 which are connected to the two parts 102, 103. The hydraulic steering cylinders 104, 105 are thus arranged on different sides of a center line in the longitudinal direction of the vehicle for steering, or turning the wheel loader 101.

The wheel loader 101 comprises an apparatus 111 for handling objects or material. The apparatus 111 comprises a linkage 106 and an implement 107 in the form of a bucket which is mounted on linkage 106. Here, the bucket 107 is filled with a material 116. A first end of the linkage 106 is coupled to the front vehicle part 102 for bringing about a lifting movement of the bucket 107. The bucket 107 is coupled to a second end of the linkage 106 for bringing about a tilting movement of the bucket 107

The linkage 106 can be raised and lowered in relation to the front part 102 of the vehicle by means of a hydraulic lift cylinder 108, which is coupled at one end to the front vehicle part 102 and at the other end to the linkage 106. The bucket 107 can be tilted in relation to the linkage 106 by means of a hydraulic tilt cylinder 110, which is coupled at one end to the linkage 106 and at the other end to the bucket 107 via a link arm system.

The system for determining a load further comprises a control unit (not shown) configured to perform the steps of the method according to various embodiment of the invention. The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

The control unit is connected to the various described features of the working machine and is configured to control system parameters. Moreover, the control unit may be embodied by one or more control units, where each control unit may be either a general purpose control unit or a dedicated control unit for performing a specific function.

Accordingly, the control unit is configured to control the system to perform the steps of a method for determining a load in a working machine 101.

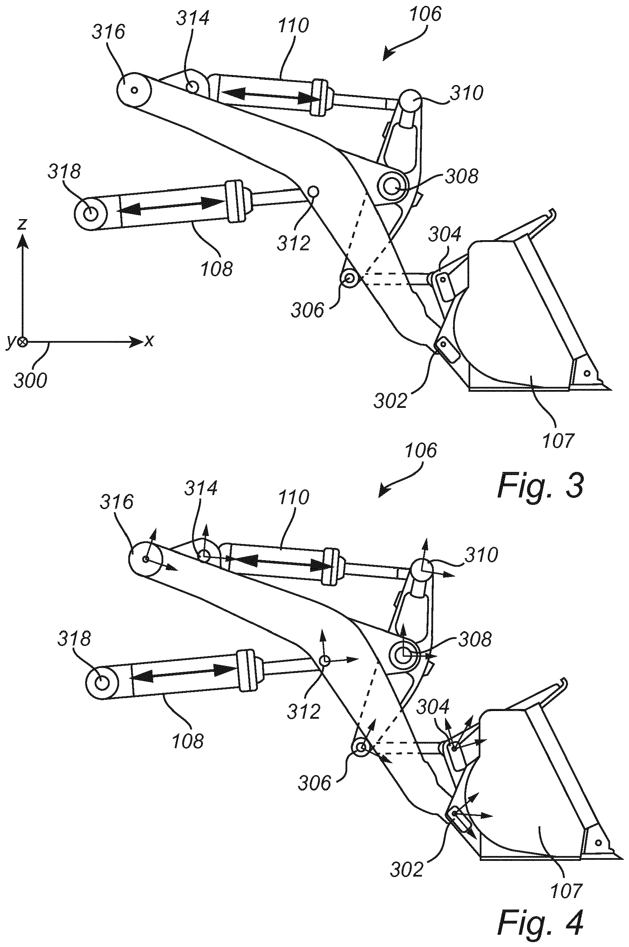

The method for determining a load in a working machine 101 comprises the steps of determining S1 at least one pressure in a first hydraulic cylinder 108, here represented by the hydraulic lift cylinder 108, and at least one pressure in a second hydraulic cylinder 110, here represented by the hydraulic tilt cylinder 110. The hydraulic lift cylinder 108 and the hydraulic tilt cylinder 110 are arranged to control the linkage and the implement 107 as described above. For hydraulic cylinders comprising two chambers, a positive pressure acting in the opposing longitudinal directions of the hydraulic cylinders is determined as illustrated by the arrows of the lift cylinder 108 and the tilt cylinder 110 in Fig. 3. In case of a hydraulic cylinder comprising two chambers, separate sensors are used for measuring the pressure on the piston and the piston rod side.

Next, at least one link angle between at least two links in the linkage is determined S2. For the linkage 106 illustrated in Fig. 3, it is sufficient to know the angle at one of the bearings 302, 304 connecting the linkage 106 to the bucket 107, and the angle of the bearing 316 connecting the linkage 106 to the front vehicle part 102 to know the position of all the components in the linkage 106. It may also be desirable to measure the angle of the articulated bearing connecting the front vehicle part 102 to the rear vehicle part 103. The information about the angle of the articulated bearing is used to translate a steering force into the coordinate system of the selected linkage bearing. For a selected linkage bearing in which a load is to be determined, and for each of the first and second hydraulic cylinder 108, 110, at least two perpendicular force components acting on the bearing are determined S3 based on the determined at least one pressure in the first and second hydraulic cylinders 108, 110 and on the link angle.

In the next step, a load on the bearing is determined S4 as a linear combination of the determined at least two perpendicular force components from each of the first and second hydraulic cylinder using predetermined constants for the linear combination.

Finally, information indicative of the load is provided S5 to an operator of the vehicle. The operator can thereby be aware of the current load on one or more components of the vehicle. The skilled person realizes that an indication of the load may be provided in a multitude of various ways, describing loads on one or more components of the linkage 106.

Fig. 3 further illustrates a reference coordinate system 300 used to describe various embodiments of the present invention. In the reference coordinate system 300, the xy-plane defines the horizontal plane of the vehicle where the x-axis extends along the length direction of the vehicle and the y-axis is perpendicular to the length direction in the horizontal plane. The z-axis defines the vertical direction, thereby forming a three-dimensional coordinate system with perpendicular axes. In a body fixed coordinate system, the coordinate system is defined with respect to the specific component for which a load is to be determined as will be illustrated in the following.

Fig. 3 schematically illustrates the linkage 106 of Fig. 1 in further detail. The linkage comprises a plurality of bearings 302, 304, 306, 308, 310, 312, 314, 316, 318 connecting the links of the linkage to each other, to the implement and to the lift and tilt hydraulic cylinders 108, 110. Fig. 3 further illustrates the linkage 106 with body fixed coordinate systems for various components, with the origin of the coordinate system here defines as the center of the bearing. In the body fixed coordinate system, the coordinate system is aligned with the component, i.e. the body, for which a load is to be determined.

In an example description relating to the bearing 302 connecting the linkage to the implement, the loads on the bearing in the X- Y-, and Z-direction can be determined as:
- Load Y = C_{1y}×F_{LX} + C_{2y}×F_{LZ} + C_{3y}×F_{TX} + C_{4y}×F_{TZ} + C_{5y}×F_{S1X} + C_{6y}×F_{S1Y} + C_{7y}×F_{S2X} + C_{8y}×F_{S2Y}
- Load X = C_{1X}×F_{LX} + C₂ₓ×F_{LZ} + C₃ₓ×F_{TX} + C₄ₓ×F_{TZ}
- Load Z = C_{1z}×F_{LX} + C_{2z}×F_{LZ} + C_{3z}×F_{TX} + C_{4z×}F_{TZ}

In the above relations, Load Y, Load X and Load Z describe the bearing load in the Y- X and Z-directions, respectively. C₁ₓ to C₄ₓ are constants of the linear relation describing the loads in the x-direction, C_{1y} to C_{8y} describes the loads in the y direction and C_{1z} to C_{4z} describe the loads in the Z-direction. The force components in x-, y- and z- directions are represented by F_{XYZ}, where the notation L, i.e. F_{L} represents a force component from the lift cylinder 108, the notation T, i.e. F_{T}, corresponds to a force component from the tilt cylinder 110 and S1, S2 represent force components from the first and second steering cylinder 104, 105, respectively. The magnitude of each force component is determined based on the angle and pressures. It should be noted that the different constants depends on factors such as linkage geometries and types of linkages. The described constants are determined in a controlled environment with a plurality of sensors mounted on a test machines.

The constants may also depend on the type of material which is handled by the working machine. Thereby, a working machine may be provided with a range of different sets of constants for example for different implement and for handling different materials. The specific set of constants to be used can then be selected by an operator of the working machine or automatically based on a connected implement so as to ensure that the correct linear relations are used for the current configuration and operating condition of the working machine.

For some of the bearings and for some operating conditions, the force component in the y-direction can be considered to be negligible and thereby excluded from the calculation. The force component in the y-direction can for example be neglected if the pressure of the steering cylinders 104, 105 are low or zero.

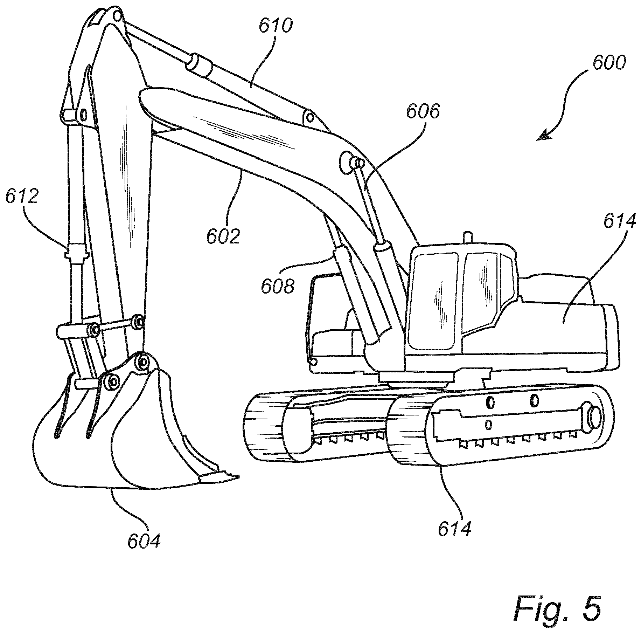

Fig. 5 schematically illustrates an excavator 600 comprising a linkage 602 and a bucket 604 attached to the linkage 602. The excavator comprises a plurality of hydraulic cylinders 606, 608, 610 and 612 for controlling the linkage. In the illustrated example, the linkage 602 of the excavator 600 comprises two boom cylinders 606, 608, and arm cylinder 610 and a bucket cylinder 612. An excavator linkage 602 typically comprises an additional degree of freedom in comparison with the linkage 106 of the wheel loader. Moreover, the excavator 600 comprises a upper frame 614 which is rotatable in relation to the undercarriage 616 of the excavator 600. The upper frame 614 is rotatable by means of a motor, such as a hydraulic motor.

Bearing loads of the excavator linkage 602 can be determined in the same manner as described above for the wheel loader 101 and will therefore not be discussed in further detail. In comparison to the wheel loader 101, the motor for rotating the upper frame 614 can be seen as equivalent to the steering cylinders 104, 105 of the working machine in that they provide force components in the y-direction. Accordingly, when determining a bearing load in the excavator linkage 602, the force components from the motor are taken into account.

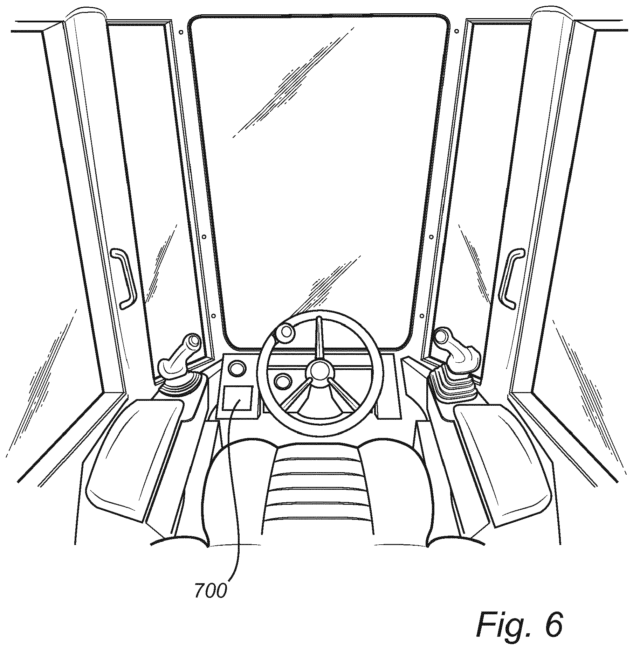

Fig. 6 schematically illustrates the interior of a working machine comprising a display screen 700 for providing information to the operator of the working machine. Information may also be provided to the operator using haptic feedback, for example by means of vibrations in the steering wheel or in the seat. The described system may also comprise a speaker for providing audio signals to the operator.

Accordingly, the described invention allows the determined loads to be used to instruct and/or train the operator in using the working machine in the most efficient manner. The determined loads can for example provide an indication of an optimal angle of attack for loading the bucket where the loads of the linkage are as low as possible. Other actions and situation which can be optimized include: the position of the lifting framework when carrying a load, the position of the tilt cylinder and lift cylinder while filling the bucket and how to fill the bucket in different circumstances. Even if an operator is familiar with the type of working machine used, the optimal operating procedure may differ depending on parameters such as the type of material which is handled, such as gravel, rock, dense materials etc. Moreover, a load indication available to the operator of the vehicle can be used to determine a preferred speed during different loading cycles and also to determine and warn for certain positions which the working machine should avoid while doing some operations. Accordingly, all of the above examples can be performed in real time in the working machine by means of the described method and system.

Thereby, information can be continuously presented to the operator of the working machine so that the operator can get immediate feedback describing the efficiency of the current operation compared to a reference value. The operator can thereby adjust the manner of operation when performing the work cycle and get the immediate response illustrating if the change improved the operation efficiency. Thereby, an intuitive and easily understandable system is provided with a low threshold for the operator to use. If it is desirable to provide additional detail, the system can also present information, automatically or upon request, describing which components in the working machine that are being exposed to excessive loads, which in turn may increase the understanding of how the working machine should be operated efficiently.

It is to be understood that the present invention is not limited to the embodiments described above and illustrated in the drawings; rather, the skilled person will recognize that many changes and modifications may be made within the scope of the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for determining a load in a working machine (101) comprising a linkage (106) configured to be connected to an implement (107), the method comprising:
determining (S1) at least one pressure in a first hydraulic cylinder (108) and at least one pressure in a second hydraulic cylinder (110) arranged to control said linkage;
determining (S2) at least one link angle between at least two links in the linkage;
the method being **characterized by**, for a known linkage configuration and for a selected linkage bearing, determining (S3), for each of said first and second hydraulic cylinder, at least two perpendicular force components acting on said bearing, based on said determined at least one pressure in each of said first and second cylinders and said at least one link angle; and
determining (S4) a load on said bearing as a linear combination of said determined at least two perpendicular force components using predetermined constants for the linear combination; and
providing (S5) information indicative of said load to an operator of the vehicle.

2. The method according to any claim 1, further comprising:
determining a load of a plurality of bearings of said linkage;
based on said determined load of said plurality of bearings, determining a combined load value for said linkage;
comparing the combined load value with a predetermined reference load value for said linkage; and
providing information to said operator indicative of a correspondence of said combined load value to said reference load value.

3. The method according to claim 2, further comprising providing a warning to said operator if said combined load value exceeds said reference load value.

4. The method according to any one of the preceding claims, further comprising transforming at least one determined load for a predetermined time period into a predicted life consumption of at least one element of said linkage.

5. The method according to claim 4, wherein transforming at least one determined load for a predetermined time period into a predicted life consumption comprises determining a stress in said element based on said determined load using finite element calculations.

6. The method according to claim 4 or 5, further comprising:
performing a predetermined work cycle;
determining a load of at least one bearing during said work cycle;
estimating a life consumption of at least one element of said linkage for said work cycle;
comparing the estimated life consumption of said element for said performed work cycle with an reference life consumption of said element for a corresponding reference work cycle; and
providing information to the operator indicative of the correspondence between the estimated life consumption and the reference life consumption.

7. The method according to any one of the preceding claims, further comprising, for a predetermined work cycle, identifying a work state within said work cycle where a load exceeds a reference load for a corresponding reference work state.

8. The method according to any one of the preceding claims, further comprising, for a predetermined work cycle, identifying an operation within said work cycle where a load exceeds a reference load for a corresponding reference operation.

9. The method according to any one of claims 4 to 6, further comprising providing information to said operator based on said load in the form of a percentage of a reference value.

10. The method according to any one of the preceding claims, further comprising providing information describing life consumption to a remote server.

11. A computer program product comprising program code means for performing the steps of any of claims 1 to 10 when said program is run on a computer.

12. A computer readable medium carrying a computer program product comprising program code means for performing the steps of any of claims 1 to 10 when said program product is run on a computer.

13. A system for determining a load in a working machine (101), the system comprising:
a linkage (106) of a working machine, the linkage being configured to be connected to an implement (107);
a first hydraulic cylinder (108) and a second hydraulic cylinder (110) arranged to control the linkage;
at least one pressure sensor arranged in each first and second hydraulic cylinder to determine a pressure in the respective cylinder; and
at least one angle sensor arranged to determine a link angle between at least two links of the linkage;
the system being **characterized by** further comprising a control unit configured to, for a known linkage configuration and for a selected linkage bearing, determine at least two perpendicular force components acting on said bearing, based on said first and second pressure and said link angle; and
determine a load on said bearing as a linear combination of said determined force components using predetermined constants for the linear combination, the system further comprising means for providing information indicative of said load to an operator of the vehicle.

14. The system according to claim 11, wherein said means for providing information comprises a display (600), a speaker and/or a haptic device.

15. A vehicle comprising a system according to claim 13 or 14.
